# EUROPEAN PATENT APPLICATION

(11) **EP 1 180 733 A1**
(43) Date of publication of application: **20.02.2002**
(21) Application number: 01119412.3
(22) Date of filing: 11.08.2001
(51) Int. Cl.: G05B 13/02, G05B 11/42

(54) **Frequency domain auto-tune for an internal motor controller**

(30) Priority: 14.08.2000 US 225187 P; 20.04.2001 US 839879; 14.08.2000 US 225198 P
(71) Applicant: KOLLMORGEN CORPORATION, Simsbury, CT 06070-2004 (US)
(72) Inventor: Krah, Jens Onno, 42327 Wuppertal (DE); Ellis, George, Blacksburg, VA 24060 (US)
(74) Representative: Königseder-Egerer, Claudia D.

(57) **Abstract**

A built-in auto-tuning system of a motor control system provides an auto-tuning of the motor control system. The built-in tuning system generates and applies a plurality of test signals to the controller. In response to the test signals, the tuning system obtains response data such as the gain and phase. Based on the received data, the tuning system detects the crossover frequencies of the control system. The tuning system then calculates the phase and gain margins of the control system. The calculated gain and phase margins are compared with a set of predetermined values by the tuning system to automatically adjust the compensation parameters of the motor control system for a stable operation.

## Description

This application claims priority from provisional United States Patent Application Serial No. 60/225,187 entitled VELOCITY LOOP AND POSITION AUTO-TUNE USING A DRIVE INTERNAL BODE PLOT CALCULATION filed on August 14, 2000, the entirety of which are incorporated by reference herein.

### FIELD OF THE INVENTION

This invention relates to a method and system for an auto-tuning of a controller. More particularly, the present invention relates to a method and system by which a controller is automatically tuned using a built-in auto-tuning system inside the controller.

### BACKGROUND OF THE INVENTION

A control system, e.g., a motor control system, generally includes a controller and a system to be controlled which is connected to the controller through a feedback loop. In operation, the system is controlled by the output of the controller and the system output is fed back via a feedback path where it is subtracted from a reference input to form an error signal. This error signal is processed by the controller to generate a modified control input to the system. The cont-roller often needs tuning because of changes in characteristic properties such as motor/load inertia, resonance due to a compliance, backlash and friction etc.

A controller usually includes filters or compensators. A compensator is a filter that is designed to provide a specific gain and phase shift to the controlled system, usually at a specific frequency. PID (Proportional - Integral - Derivative) type compensators are widely used because of their general purpose design. As used herein, the term a PID type compensator encompasses all variations and combinations of the compensation functions of the PID compensator, including P, PI and PD configurations. A PID type compensator is so named because its control output is de-rived from a weighted sum of the input, the integral of the input, and the derivative of the input. The PID type compensator controls in a proportional control mode, integral control mode, and differential control mode simultaneously so that the system reaches a target value in a stable state within as fast a period of time as is possible. Such compensators include a proportional amplification unit with a proportional gain parameter Kₚ, an integration unit with an integration gain parameter KI, and a derivative unit with a derivative gain parameter KD.

Tuning a controller is the process of setting or adjusting the compensator gains (e.g., KP, KI, KD) of the controller to achieve desired performance. For example, since the stability of a motion controller may vary due to the interaction with load condition, compensator gains of the controller must be tuned (i.e., adjusted) regularly to operate effectively in a specific application of the controller. Controllers that are poorly tuned either act too aggressively or too sluggishly. When the uncertainty in the disturbance or process dynamic characteristics are large, the tuning of a controller is often difficult. As a result, the tuning process in the past has usually required a highly experienced technician who tuned the system manually. However, while manual tuning of a controller is possible, it is often tedious and inaccurate, especially when characteristics of the controlled process change over time. In addition, process non-linearity of the controller makes it difficult to manually bring the system into controlled operation.

Auto-tuning is a process in which the compensator gains of a control system are automatically adjusted so that the tuning process does not require an engineer or a highly experienced technician. Many techniques have recently been proposed for the auto-tuning of controllers, such as relay feedback, pattern recognition techniques, and correlation techniques. Such auto-tuning techniques are, however, not cost-effective and time-efficient when used in a practical control system.

A Dynamic Signal Analyzer (DSA) is commonly used to perform a frequency response analysis which can provide a frequency domain tuning. The DSA generates a multi-frequency signal which can be injected into the control system as a command. The response to the injected signal is returned to the DSA and analyzed usually employing a Bode-Plot. A DSA unit, however, is relatively expensive, often costing several times more than the controller. Moreover, the number of points available to the DSA for injecting test signals is often fewer than desired. As a result, the use of such equipment is usually limited to the research laboratory where internal access can be obtained and is not generally available at the customer site.

### SUMMARY OF THE INVENTION

The above-identified problems are solved and a technical advance is achieved in the art by providing a method and system that perform an auto-tuning of a motor based on a frequency response function.

Instability occurs when the loop gain of a control system is 0 dB (i.e., unity gain or greater) and phase is -180° or more (i.e., positive feedback). In the frequency response function of the control system, the gain crossover frequency (i.e., a frequency of the 0 dB crossing) and the phase crossover frequency (i.e., a frequency of -180° crossing) are determined. A phase margin (PM) is the difference in the phase value at the gain crossover frequency and -180°. A gain margin (GM) is the difference in the gain value at the phase crossover frequency and 0 dB. The gain and phase crossover frequencies are the boundaries of the stable region. The gain and phase margins indicate a safe operating range within the boundaries.

In accordance with an aspect of the invention, there is provided a built-in auto-tuning method and system of a motor control system in which a plurality of test signals at different fre-quencies are internally generated and applied to the motor control system which is set with initial controller parameters (i.e., gains of compensators). Subsequently, frequency response data (e.g., gain and phase) for the test signals are received. By analyzing the received data, gain and phase crossover frequencies are detected. Subsequently, the gain and phase margins are calculated at the crossover frequencies. The calculated gain and phase margins are then compared with a set of predetermined gain and phase margins which are desirable to the operation of a motor control system in a particular application. If the calculated gain and phase margins are outside the preferred range, the built-in auto-tuning method and system adjust the initial controller parameters and repeats the sequence to bring the gain and phase margins within the preferred range. By trial and error, the controller parameters are automatically adjusted until a suitable gain and phase margins are found for the particular applications.

Other and further aspects of the present invention will become apparent during the course of the following detailed description and by reference to the attached drawings.

### BRIEF DESCRIPTION OF THE DRAWINGS

Fig. 1 illustrates an overview of a motor control system in which a built-in auto-tuning system is implemented as an embodiment of the present invention.

Fig. 2 is a block diagram of an exemplary embodiment of the auto-tuning system as shown in Fig. 1.

Fig. 3 is a detailed view of the motor control system of Fig. 1

Fig. 4 is a flow chart illustrating an exemplary process by which the built-in auto-tuning system performs the tuning process.

Fig. 5 is an example of an open-loop Bode-Plot.

### DETAILED DESCRIPTION

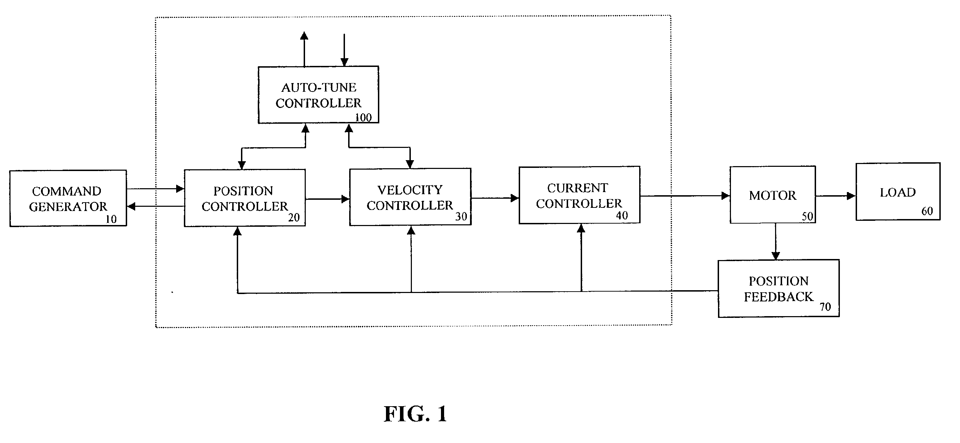

Fig. 1 illustrates an overview of a motor control system in which a built-in auto-tuning system is implemented. The motor control system includes a position controller 20, velocity controller 30, current controller 40, motor 50, load 60 and position feedback 70. A command generator 10, issues commands for the control of the motor and load, is externally connected to the position controller of the motor control system through command and response paths. Upon receiving commands from the command generator, the position controller generates a positional output for the velocity controller and the velocity con-troller in turn generates a torque signal for the current controller. The torque signal is converted into a current signal in the current controller and the current signal is then input to the motor and load. The position feedback feeds back the position information from the motor to the current controller, velocity controller and position controller where the feed-back output is subtracted from a reference input to form an error signal.

The control system further includes an auto-tune controller 100 which is configured to perform an auto-tuning of the control system. The auto-tune controller is connected to both the position controller and velocity controller tuning either or both of the controllers. The auto-tune controller is preferably implemented inside either of the two controllers in this embodiment. Alternatively, the auto-tune controller may be implemented outside the two controllers as a separate unit. A personal computer may be utilized for this separate auto-tune controller implementation.

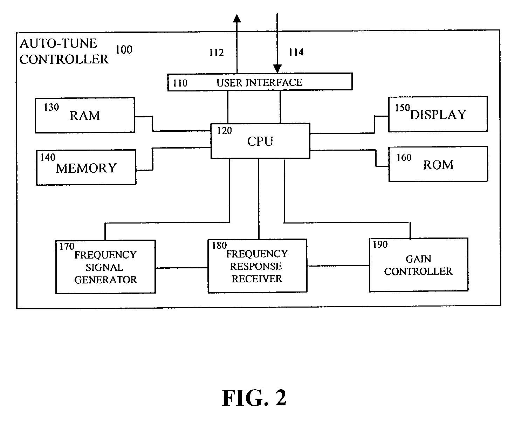

Fig. 2 is a block diagram of an exemplary embodiment of the auto-tune controller as shown in Fig. 1. The auto-tune controller includes the basic elements such as a CPU 120, RAM 130, Memory 140 and ROM 160. Further included is a user interface 110 for communication with a user and display 150 for displaying the test results (e.g., a frequency response function). The user interface may also be used to connect to a personal computer to download/upload data and software from the auto-tune controller.

The auto-tune controller further includes a frequency signal generator 170, frequency response receiver 180 and gain controller 190. The frequency signal generator generates test signals (e.g., sinusoidal signal) and injects the test signals to the position controller and/or velocity controller depending on the situation for the auto-tuning process. The frequency response receiver receives the output signal (e.g., gain and phase), which is in response to the injected test signals via the position feedback. Upon receiving the output signal, the frequency response receiver sends the received signal to the CPU for a frequency domain analysis. The gain controller receives control information from the CPU and adjusts the gains of the position and/or velocity controllers. Other functional blocks may be added depending on specific tuning method.

The auto-tune controller is mainly implemented with the following functionality to perform the auto-tuning process; issuing commands to initiate and terminate the auto-tuning process; generating and applying test signals to either or both of the position and velocity controllers; receiving response data from either or both of the position and velocity controllers; detecting critical crossover points based on the received data; calculating the characteristic values (e.g., phase and gain margins) from the critical points; comparing the characteristic values with a set of prede-termined values; and, based on the comparing, adjusting the controller gains (e.g., proportional and/or integral gains etc.) to bring the characteristic values within a predetermined range of values.

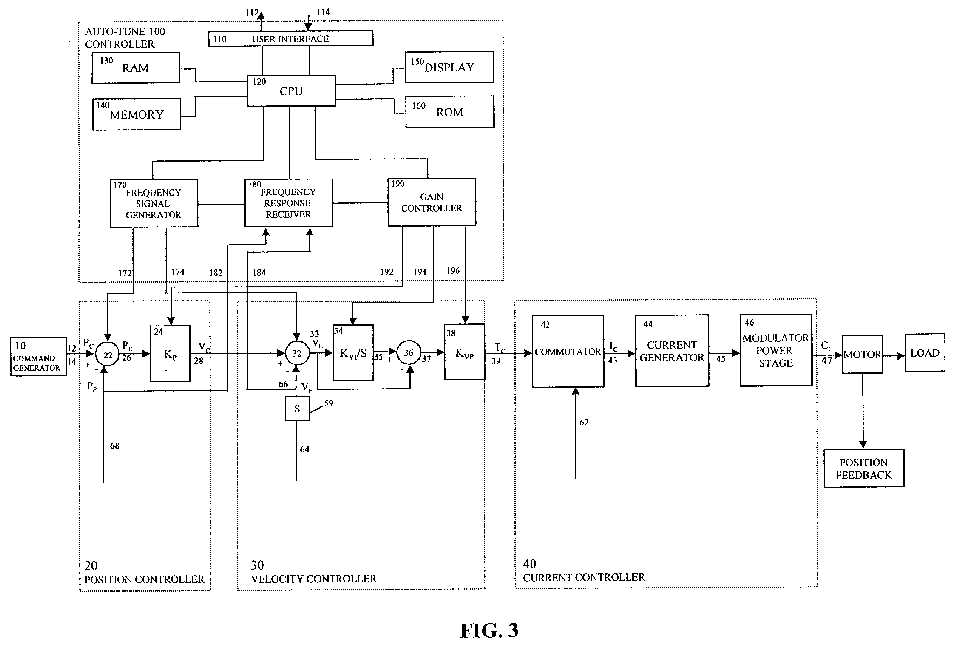

Fig. 3 is a detailed view of the motor control system of Fig. 1 in which the auto-tune controller is connected with a cascaded type position and velocity controllers as an embodiment. The auto-tune controller is connected to the position and velocity controllers through multiple signal paths. While motion control begins with the ability to produce torque, most motion control appli-cations need more than just controlled torque. Controller loops are usually closed around torque to control the position and/or velocity of the controlled system. This requires not only sensors (e.g., resolvers and encoders) for the position feedback but also the appropriate control algorithms (e.g., compensators) in the position and velocity controllers. The control algorithm of preference in most industrial applications is the cascaded type position and velocity controllers.

The gains of the compensators (e.g., KVI/S, KVP) of the velocity controller generally depends on the behavior of the driven mechanical system during an operation (e.g., interaction between motor and load inertia). However, the main problem of the behavior is the compliance between motor and load inertia which can generate a resonance of two mass system. If the velocity controller bandwidth is above the resonant frequency, only the motor inertia is defining the velocity controller tuning while in a system with a stiff coupling (i.e., low compliance), the sum of motor and load inertia is used for the velocity controller compensation. As a result, an auto-tune algorithm has to estimate the effective inertia of the motor and load to get an optimized controller parameter set. For the position controller, the velocity controller appears to be a two-pole low-pass filter with a specified bandwidth and damping. Knowing these characteristic parameters, the gains of the position controller can be determined relatively easily.

The regular operation of the cascaded position and velocity controllers without the auto-tune controller is described below.

The position controller takes a position command 12 from the external command generator, comparing it to a position feedback 68 to generate a position error signal 26. The position error signal is processed with a position compensator 24 (i.e., a proportional controller) to generate a velocity command 28. The velocity controller takes the velocity command and compares it to a velocity feedback 66 to generate a velocity error signal 33. The velocity error signal is processed with velocity compensators 34, 38 (i.e., a proportional-integral controller) to produce a torque command 39. The torque command is then fed into a commutator 42 of the current controller where the torque command is converted into a current command 43 which operates in synchronism with the rotor position. The current command is fed into a current generator 44 and a modulator 46, sequentially, generating a control command 47 for the motor. The position feed-back includes an encoder or resolver to relay the shift position information from the motor back to the current, velocity and position controllers.

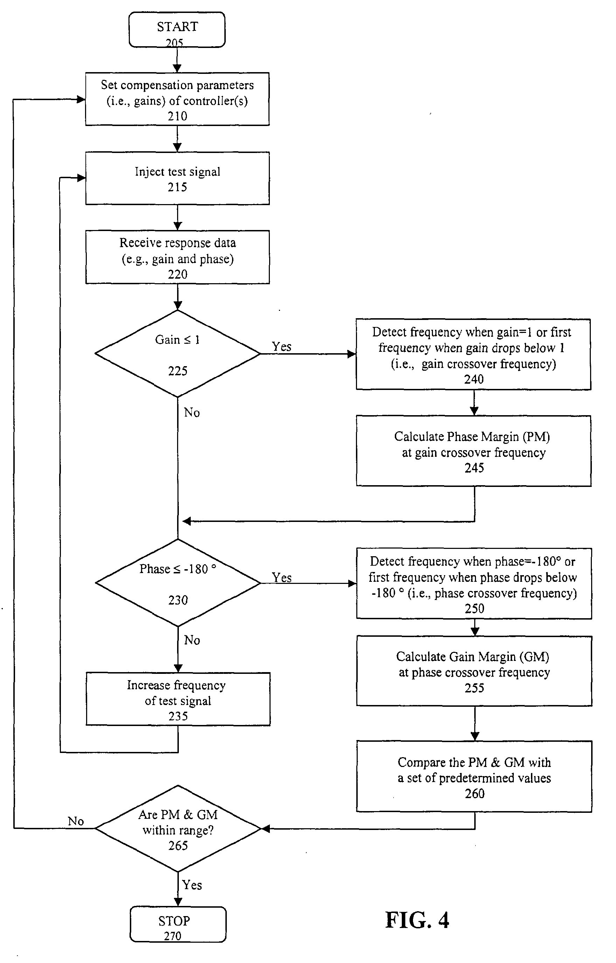

The operation of the auto-tune controller for tuning the cascaded position and velocity controllers will now be described with reference to the flow chart of Fig. 4 along with the detailed view of the motor control system of Fig. 3.

Fig. 4 is a flow chart illustrating an exemplary tuning process.

At step 210 of Fig.4, upon receiving a command from the CPU of the auto-tune controller, the gain controller sets an initial gains of the position and velocity controllers. The initial gain values are set to be relatively low values that produce stable operation of the motor control system. For example, proportional gain is set to a low starting value of KP = 0.5. The integral action time is then set to Tn = a/2πf cross with a = 3 for a critical damping case.

At step 215, the frequency signal generator injects a sinusoidal test signal to the loop of the velocity controller assuming that the tuning process is directed to the velocity controller. Alternatively, the frequency signal generator may inject the test signal to the loop of the position controller. The auto-tuning process starts at a very low frequency which is lower than the achievable velocity controller bandwidth to avoid any damage of the motor control system. For example, a starting frequency of 20 Hz is lower than the achievable cross-over frequency in nearly all servo applications.

At step 220, in response to the test signal, the frequency response receiver receives response data. For example, the frequency response receiver may receive the gain and phase values at signal path 66 where feedback signal from the position feedback is differentiated by a differ-entiator 59. The received data may be stored in the memory of the auto-tune controller.

At step 225, the CPU determines whether the gain value from the frequency response receiver is less than or equal to one (i.e., 0 dB). If not, the process proceeds to step 230. If yes, the process proceeds to step 240.

At step 230, the CPU determines whether the obtained phase value from the frequency response receiver is less than or equal to -180° . If not, the process proceeds to step 235. If yes, the process proceeds to step 250.

At step 235, upon receiving information that gain and phase values are higher than one and -180°, respectively, the CPU of the auto-tune controller issues a command to the frequency signal generator to generate and inject another test signal which has a higher frequency than the previous test signal. The process then goes back to step 215 and repeats steps 220, 225 until the received gain value equals to or less than one.

At step 240, upon determining that the obtained gain value is equal to or less than one, the CPU detects the frequency when the gain value equals to one (i.e., the gain crossover frequency), or detects the first frequency when the gain value drops below one. The detected frequency point is stored in the memory.

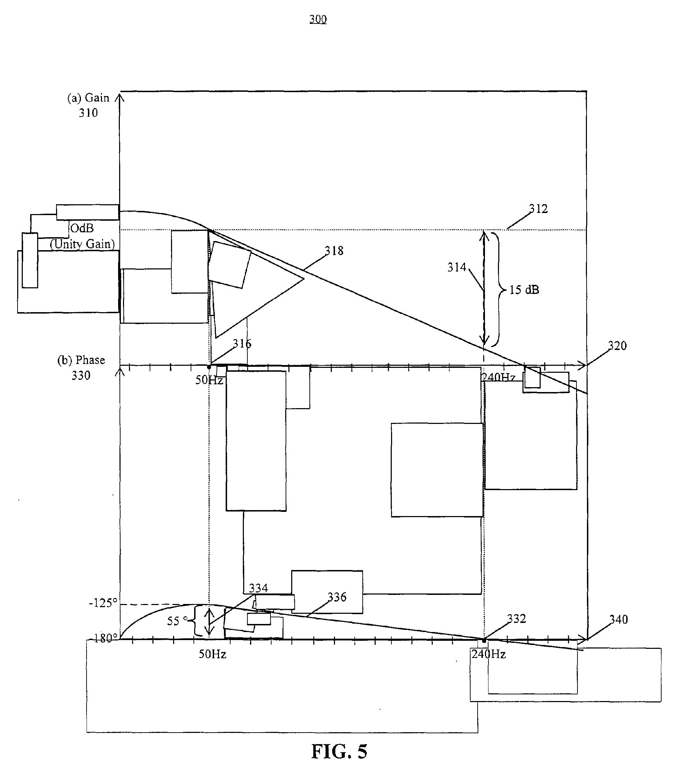

Fig. 5 is an example of an open-loop Bode-Plot 300 that may be utilized by the CPU of the auto-tune controller as a model to detect the gain and phase crossover frequencies. The Bode-Plot includes a gain plot 310 and phase plot 330 using the same frequency reference 320, 340. The Bode-Plot shows a gain crossover frequency point 316 at 50 Hz point and the corresponding phase margin of 55° obtained at the gain crossover frequency. The Bode-Plot also shows a phase crossover frequency point 332 at 240 Hz point and the corresponding gain margin of 15 dB ob-tained at the phase crossover frequency. The open-loop Bode-Plot can be used for determining the gain and phase margins at the phase and gain crossover frequencies, respectively, for the stability analysis of a controller. For example, while measuring the gain and phase values from the lower frequency range to the higher, once a gain crossover frequency is detected, the phase margin is calculated by subtracting -180° from the obtained phase value at the gain crossover frequency. Once a phase crossover frequency is detected at a higher frequency than the gain crossover fre-quency, the gain margin is calculated by subtracting the obtained gain value at the phase crossover frequency from 0 dB. Alternatively, other types of frequency response function such as the closed-loop Bode-Plot and step responses may be utilized. The bandwidth and peaking values are calculated in the closed-loop Bode-Plot, while the over shoot and rise time are measured in the step responses for the stability analysis of a controller.

At step 245 of Fig. 4, upon detecting the gain crossover frequency, the CPU of the auto-tune controller calculates the phase margin by subtracting -180° from the obtained phase value at the gain crossover frequency. The CPU also stores the phase margin in the memory of the auto-tune controller.

At step 250, upon determining that the obtained phase value is equal to or less than -180°, the CPU of the auto-tune controller detects the frequency when the phase value equals to -180° (i.e., the phase crossover frequency), or detects the first frequency when the phase value drops below -180°. The detected crossover frequency point is stored in the memory of the auto-tune controller.

At step 255, upon detecting the phase crossover frequency, the CPU of the auto-tune controller calculates the gain margin by subtracting the obtained gain value at the phase crossover frequency from 0 dB. The calculated gain margin is also stored in the memory of the auto-tune controller.

At step 260, the CPU of the auto-tune controller compares the calculated gain and phase margins with a set of predetermined values. For example, while different appli-cations require different values of the gain and phase margins, experience teaches that for most application the gain margin should be between 10 and 25 dB; the phase margin should be between 35° and 80°. In Fig. 5, for example, the gain margin 15 dB and the phase margin 55° are within the ranges of 10-25 dB for the gain margin and 35°-80° for the phase margin. These values are stored in the memory of the auto-tune controller by an operator before the tuning process begins. These predetermined margins can be modified for a specific applications. For example, if a control system needs a faster response, the gain and phase margins may be narrowed. If a control system requires a more stable operation, the margins may be widened.

At step 265, the CPU of the auto-tune controller determines whether the calculated gain and phase margins are within a set of predetermined values. If the calculated gain and phase margins are within the set of predetermined values, the CPU issues a command to stop the auto-tuning process at step 270. Referring to the current example, the calculated gain and phase margins (i.e., 15 dB and 55°) are within the range of the predetermined values (i.e., 10-25 dB for the gain margin and 35°-80° for the phase margin).

If the calculated gain and phase margins are outside the range of the predetermined values, the auto-tuning process proceeds back to step 210 where the CPU issues a command to the gain controller to increase the gains of the velocity controller. One or both of the compensator gains (i.e., proportional or integral gains) may be re-set by the gain controller. After adjusting the gains, the auto-tuning process is reiterated until the calculated PM and GM values are within a predetermined range.

In the embodiment described above, the CPU of the auto-tune controller does not generate a full Bode-Plot such as shown in Fig. 5. Instead, the CPU simply detects the critical points (i.e., gain and crossover frequencies) to calculate the PM and GM. Alternatively, the CPU may generate a full Bode-Plot for display via the display during the auto-tuning process. An operator may use the displayed information for a fine tuning process of the controller. The displayed Bode-Plot and related data may also be downloaded to a personal computer for further analysis.

The inventive method and system described above provide many advantages for the quality control of a motor control system. For example, the algorithm works as an internal stand-alone auto-tuning system and there is no additional hardware required. The operator of the tuning system need no special controller tuning education and controller tuning is fully reproducible (e.g., two different persons get the same result). Only +/-15° shaft rotation are required for the tuning and tuning speed is much faster. Moreover, the controller tuning includes all specific mechanical behavior like resonance, friction and inertia etc.

The many features and advantages of the present invention are apparent from the detailed description, and thus, it is intended by the appended claims to cover all such features and ad-vantages of the invention which fall within the true spirit and scope of the invention.

Furthermore, since numerous modifications and variations will readily occur to those skilled in the art, it is not desired that the present invention be limited to the exact construction and operation illustrated and described herein, and accordingly, all suitable modifications and equivalents which may be resorted to are intended to fall within the scope of the claims. For example, much of the functionality described above as being provided by the auto-tune controller alternatively could be incorporated into the functionality provided by a chip or a CPU. Moreover, much of the functionality of the position/velocity/current controllers may also be incorporated into a chip or a CPU with the auto-tune controller.

## Claims

1. A built-in auto-tuning system within a controller of a motor control system comprising:
(i) means for injecting multiple frequency test signals sequentially into a loop of the controller;
(ii) means for receiving response data which reflects the responses of the motor control system to said multiple frequency test signals;
(iii) means for detecting critical frequency crossover points based on the received data;
(iv)means for calculating a gain margin from said response data;
(v) means for calculating a phase margin from said response data; and
(vi) means for adjusting compensation parameters of the controller to set the gain and phase margins within a set of predetermined values.

2. The auto-tuning system of claim 1 further comprising means for providing a video display for displaying the response data.

3. The auto-tuning system of claim 2, wherein said video display is on a personal computer.

4. A method of tuning a controller of a motor control system with a built-in auto-tuning system comprising:
(i) injecting multiple frequency test signals sequentially into a loop of the controller;
(ii) receiving response data which reflects the responses of the motor control system to said multiple frequency test signals;
(iii) detecting critical frequency crossover points based on the received data;
(iv) calculating a gain margin from said response data;
(v) calculating a phase margin from said response data; and
(vi) adjusting compensation parameters of the controller to set the gain and phase margins within a set of predetermined values.

5. The method of claim 4 further providing a video display for displaying the response data.

6. The method of claim 5, wherein said video display is on a personal computer.

7. The method of claim 4, wherein the multiple test signals are a plurality of sinusoidal sig-nals with different frequencies.

8. The method of claim 4, wherein the compensation parameters are one or multiple of the proportional, integral and derivative gains of the controller.

9. A built-in auto-tuning system within a controller of a motor control system comprising:
(i) a frequency signal generator for providing multiple test signals and to apply the multiple test signals sequentially at different frequencies to a loop of the controller;
(ii) a frequency response detector for detecting response data which reflects the responses of the motor control system to said multiple frequency test signals;
(iii) a gain controller for adjusting gains of the controller thereby allowing to set the gain and phase margins within a set of predetermined values;
(iv) a computer comprising a memory unit, a processing unit and a display unit, is configured to
(a) issue a command to the gain controller to set the gains for the controller;
(b) issue a command to the frequency signal generator to inject a test signal to the con-troller;
(c) receive the response data of the controller in response to the multiple test signals;
(d) detect critical frequency crossover points based on the received data;
(e) calculate phase and gain margins from the response data;
(f) compare the calculated phase and gain margins with the predetermined values; and
(g) issue a command to the gain controller to adjust the gains of the controller.

10. The built-in auto-tuning system of claim 9, wherein said response data is displayed on a personal computer.

11. The built-in auto-tuning system of claim 9, wherein the multiple test signals are a plurality of sinusoidal signals with different frequencies.

12. The built-in auto-tuning system of claim 9, wherein the gains are one or multiple of the proportional, integral and derivative gains of the controller.

13. The built-in auto-tuning system of claim 9, wherein the functionality of the frequency signal generator, the frequency response detector, the gain controller and the computer is incor porated into a single chip or a CPU.

14. The built-in auto-tuning system of claim 9, wherein the functionality of the auto-tuning system and the controller of a motor control system is incorporated into a single chip or a CPU.
